# FASCICULE DE BREVET EUROPEEN

(11) **EP 1 611 749 B1**
(45) Date de publication et mention de la délivrance du brevet: **11.01.2012**
(21) Numéro de dépôt: 04741437.0
(22) Date de dépôt: 23.03.2004
(51) Int. Cl.: H04N 7/24

(54) **TRAITEMENT D'UN FORMAT DE FLUX DE DONNEES POUR LA RECEPTION AUDIOVISUELLE MOBILE**
VERARBEITUNG EINES DATENSTROMFORMATS FÜR MOBIL-AUDIOVISUELL-EMPFANG
PROCESSING A DATA STREAM FORMAT FOR MOBILE AUDIOVISUAL RECEPTION

(30) Priorité: 26.03.2003 EP 03290768
(43) Date de publication de la demande: 04.01.2006
(73) Titulaire: Thomson Licensing, 92130 Issy-les-Moulineaux (FR)
(72) Inventeur: WENDLING, Bertrand, F-78220 Viroflay (FR); ODDOU, Christophe, F-94340 JOINVILLE LE PONT (FR)
(74) Mandataire: Kohrs, Martin
(86) Numéro de dépôt international: PCT/EP2004/050352
(87) Numéro de publication internationale: WO 2004/086767

(56) Documents cités:
- EP-A- 0 959 574
- EP-A- 1 253 721

## Description

### Champ technique

La présente invention concerne une méthode et un dispositif de transmission et de réception d'un flux de données numérique. Plus particulièrement, ce flux de données est transmis et reçu dans des tranches temporelles disjointes.

Cette invention présente une application particulièrement pertinente dans le champ de la transmission de flux de données tel que les systèmes de télévision numérique, et plus spécifiquement, pour les systèmes basés sur des terminaux fixes ou mobiles équipés d'un récepteur et d'un décodeur à faibles capacités d'énergie.

### L'art antérieur

La présente invention décrit d'une part un procédé et un dispositif de transmission et d'autre part un procédé et un dispositif de réception pour application par exemple à la diffusion de la télévision numérique terrestre sur tous types de terminaux. L'invention est à destination des services terrestre multi-programmes numérique, pour tous types de format par exemple : LDTV (Limited Définition TeleVision), SDTV (Standard Definition TeleVision), EDTV (Enhanced Definition TeleVision), et HDTV (High Definition TeleVision), et de tous types de terminaux, terminaux fixes tels que la télévision ou terminaux mobiles tels que les téléphones cellulaires.

Les systèmes de télévision numérique transmettent via des systèmes de diffusion des informations sur différentes chaînes de télévision à destination de terminaux sous une forme numérique plutôt qu'analogique. Les canaux numériques transportant les informations des chaînes de télévision contiennent des flux de données numériques codés dans un émetteur. Ces informations sont décodées dans un terminal équipé d'un récepteur de type récepteur / décodeur numérique. Pour permettre l'interactivité, une liaison retour peut être fournie soit via le même support que celui permettant la délivrance des chaînes de télévision ou soit via un support différent tel que la liaison téléphonique. D'autres types de données, tel que de l'audio numérique, du logiciel et des données interactives peuvent être ou sont aussi transmis. Le terme « système de télévision numérique » inclut par exemple les systèmes satellite, terrestre, câble, et autres.

Le terme « récepteur / décodeur » inclut un récepteur pour recevoir, soit des signaux codés soit des signaux non codés, par exemple des signaux audio et / ou vidéo, préférablement au format MPEG. Ces signaux peuvent être transmis par différents moyens. Le récepteur / décodeur est par exemple un set-top-box connecté ou intégré à une télévision. Il peut être fixe ou portable.

Le terme MPEG fait référence au standard de transmission de données développé par le groupe de travail « Motion Pictures Expert Group » de l'« International Standard Organisation » et en particulier mais non exclusivement le standard MPEG-2 développé pour les applications de télévision numérique et le standard MPEG-4 et les autres standards MPEG compatibles. Dans le contexte de la présente demande, le terme inclut toutes variantes, modifications et développement de formats MPEG applicables à la transmission de données numériques incluant le standard DVB.

Les systèmes de diffusion quant à eux s'appuient sur des normes définies par le consortium DVB (Digital Video Broadcast) tel que DVB-T (Digital Video Broadcast - Terrestre). Le terme « DVB » préférablement réfère aux standards DVB développés par le Projet DVB de l'ETSI (European Telecommunications Standards Institute). Dans le contexte de l'invention, ce terme inclut toutes les variantes, modifications et développement des formats DVB applicables au champ de la transmission de données numériques. Ces systèmes sont définis comme des blocs fonctionnels d'équipements effectuant l'adaptation des signaux audiovisuels à partir du flux d'entrée MPEG-2 du multiplexeur, aux caractéristiques des dispositifs des usagers. Ces systèmes sont employés intensivement à la diffusion de la télévision numérique pour des dispositifs fixes de type récepteur / décodeur et télévision.

Les systèmes de diffusion peuvent fournir de grandes quantités de données à un coût relativement bas, mais offrent peu d'interactivité ou de personnalisation du contenu, puisque les mêmes données sont transmises à tous les récepteurs dans le secteur couvert.

Ces normes ont été développées pour des récepteurs / décodeurs fixes, cependant aujourd'hui il est de plus en plus pressant de vouloir réceptionner toutes ces données sur tous types de terminaux et quel que soit le lieu.

Le terme « terminal » fait référence à un équipement contenant un récepteur / décodeur et un équipement de visualisation. Il est soit de type conventionnel, c'est -à-dire il inclut un set-top box et une télévision, soit il s'agit d'un équipement mobile, muni d'un écran de taille réduite et ayant des capacités d'énergie limitées. Ces terminaux peuvent être une combinaison portable de la télévision numérique, d'un ordinateur, et de la technologie de téléphonie mobile offrant un accès Internet interactif mobile. En effet, la télévision numérique dans les voitures, les autobus et des trains est un exemple de service pour les utilisateurs mobiles. De plus, la demande de contenu multimédia dans un environnement mobile est une demande de plus en plus pressante des usagers, et tout particulièrement de flux vidéo en temps réel. La mobilité est également devenue de plus en plus importante, il est donc nécessaire de pouvoir atteindre des utilisateurs quelle que soit leur localisation et à tout moment

Actuellement, les terminaux numériques de réception audiovisuelle fixes ou portables sont alimentés par la puissance du secteur, de sorte que la consommation de courant a fait l'objet d'un travail d'optimisation très limité. En revanche, dans le cadre de la réception mobile de flux de données audiovisuels, les constructeurs de terminaux devront faire face à un réel problème d'autonomie des batteries d'alimentation, ce qui implique un travail d'optimisation qui peut remettre en cause certains aspects du système dans son ensemble.

En effet, les dispositifs utilisés sont des terminaux mobiles ayant une faible batterie et une petite antenne. La réception de larges quantités d'informations ne permet pas au terminal d'avoir une autonomie très longue. En effet, la consommation d'énergie étant telle que la durée d'utilisation d'un service serait trop faible et ne peut donc pas être envisagée selon les techniques existantes.

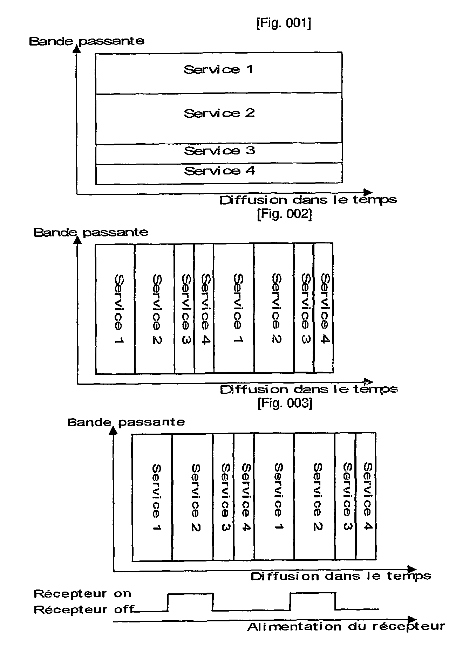

De plus, une observation a été faite montrant que seulement 5 % environ des données émises par un système de diffusion sont réellement pertinentes pour le service de l'usager, ce qui implique que 95 % environ de l'énergie est utilisée pour recevoir des données non utiles. La Figure 1 présente un schéma d'une diffusion selon le mode actuel. La bande passante est partagée entre les différents services émis en continu. Le récepteur intéressé uniquement par le service 4 (soit environ 10 % du débit total) doit recevoir l'ensemble des données en permanence (soit 100 % du débit total) et les traiter. Le traitement est effectué par les unités de réception (tuner, antenne), de démodulation et de démultiplexage présent dans le récepteur du terminal.

Une solution permettant de réduire la consommation serait de n'écouter que la faible portion du flux global de données. Cependant, selon ce schéma d'émission des flux de données, la bande passante étant partagée entre un ensemble de services différents en continu, il n'est pas possible de se mettre en écoute que d'une portion de cette bande passante. L'équipement doit recevoir l'ensemble des flux de données pour ensuite réaliser le filtrage.

Partant du principe qu'un terminal n'est destiné à recevoir à un moment donné qu'un seul service audiovisuel d'un flux de services pouvant en contenir plusieurs, il paraît intéressant d'exploiter cette particularité en définissant une structure de transport basée sur le multiplexage temporel. En effet, au lieu de diffuser un service en continu sur une portion de la bande passante, le service est transmis sur des tranches temporelles disjointes successives occupant ainsi tout ou partie de la bande passante pendant un intervalle de temps. Cette technique appelée « time slicing » est montrée à la Figure 2. Ainsi chaque service, au lieu d'être diffusé en continu est émis par tranche. Chaque tranche du flux de données est émise à un débit plus grand qu'en mode continu. Pour reconstituer un service audiovisuel continu, le récepteur du terminal doit recevoir ces différentes tranches et les assembler.

Dans ce cas, le récepteur toujours intéressé par le service 4 (représentant 10 % de la bande passante totale) ne se met en réception que lors de la diffusion du service 4, soit 10% du temps. Concernant les 90% restant, les unités de réception, de démodulation et de démultiplexage du récepteur du terminal sont arrêtés. Il y a donc potentiellement une économie d'énergie de 90%.

La mise en oeuvre de cette technique consiste à introduire dans chaque tranche du flux de données, l'information de délai entre deux tranches, c'est-à-dire le temps durant lequel les unités de traitement en réception de récepteur, c'est-à-dire les unités de réception, de démodulation et de dé-multiplexage sont arrêtées. A la fin de ce temps, ces unités vont se réveiller et réceptionner les données pertinentes. Le récepteur connaît ainsi la séquence de tranche d'un flux de données, et arrête toute réception de données entre la transmission de deux tranches du service.

Cette technique utilise l'intelligence du séquencement de la transmission. Sa mise en oeuvre nécessite que le centre de transmission connaisse le délai entre la transmission de deux tranches de service et introduise cette information dans les tranches du flux de données transmises. Ainsi les unités précitées ne fonctionnent que lors de la réception de la tranche pertinente pour l'usager. Entre deux transmissions, ces unités sont soit éteintes soit en veille. La Figure 3 montre le fonctionnement en marche / arrêt du récepteur c'est-à-dire des unités de réception, de démodulation et de dé-multiplexage.

Lors de la transmission de services non sélectionnés par l'usager, les unités de traitement en réception restent éteints ou en veille. Elles se réveillent un quantième de temps avant la transmission du service de l'usager. Ce quantième de temps correspond au délai nécessaire aux unités de réception, de démodulation et de dé-multiplexage du récepteur pour redémarrer, se synchroniser au flux de données reçu et être apte à traiter l'information en réception.

Cette technologie présente donc un intérêt certain par rapport à la consommation d'énergie. Elle présente toutefois plusieurs inconvénients si elle est utilisée en l'état :

- Le fait de faire fonctionner les unités de réception, de démodulation et de démultiplexage en « tout ou rien » crée des appels de courants qui provoquent une consommation additionnelle d'énergie, de sorte qu'on ne peut espérer réduire la consommation proportionnellement au service sélectionné.
- Le fait de faire fonctionner l'unité de démodulation en « tout ou rien » réduit la durée de vie des composants qui composent cette unité en provoquant une usure accélérée.
- Le fait d'éteindre les unités de traitement en réception implique que lors du réveil, elles vont se remettre en réception sur le canal sur lequel elles étaient en réception avant de s'éteindre. Ceci implique que si l'usager se déplace, la remise en route du récepteur peut poser des problèmes, car les paramètres de réception c'est-à-dire l'identifiant du canal de réception connu du récepteur auront été modifiés lors du passage d'une zone de réception à une autre. Le fait d'arrêter la réception d'information entre la transmission de deux tranches de service implique qu'il n'est plus possible de recevoir l'information de signalisation et donc entre autre, les droits de l'usager.

Ainsi aujourd'hui les technologies utilisées telles que décrites dans les standards (DVB par exemple) sont capables de délivrer un large débit mais les terminaux mobiles eux ne sont pas capables de traiter ces informations avec une autonomie suffisante. Ainsi l'objectif de l'invention est de permettre de fournir des services qui peuvent être utilisés par les terminaux mobiles tout en n'ayant pas les inconvénients cités précédemment. Ainsi elle doit permettre aux terminaux de faible puissance de recevoir les services et informations durant un temps relativement élevé (par exemple 4 heures) avec des batteries de taille raisonnable. Ainsi, il est nécessaire de réduire autant que possible la consommation des terminaux tout en ne provoquant pas une usure prématurée des composants du terminal mobile. De plus, le récepteur/décodeur doit s'adapter aux changements de canal de réception lors du passage d'une zone de réception à une autre.

### Révélation de l'invention

Selon un premier aspect de l'invention, il est fourni un procédé de réception d'un flux de données transmis par tranche sur un ou plusieurs canaux de diffusion comprenant une étape de réception des données d'une tranche du flux de données transmise sur un canal de diffusion courant, une étape de changement de canal de réception pour commuter du canal de diffusion courant vers un second canal après avoir reçu la tranche du flux de données, une étape d'écoute sur ce second canal d'un événement identifiant l'occurrence de la transmission de la tranche suivante du flux de données, et une étape de changement de canal de réception pour commuter de ce second canal vers le canal de diffusion courant ou un autre canal de diffusion.

Ce procédé de réception permet de commuter d'un canal de diffusion d'un service vers un second canal, afin de ne pas recevoir les services non attendus par l'usager. La réception d'un flux de données lié à un service est consommateur d'énergie. Ce procédé met en place une étape d'écoute sur un second canal, préférablement à débit bien moindre, d'un événement indiquant l'occurrence de la transmission de la tranche suivante du flux de données. Ce procédé permet donc de réduire la consommation d'énergie du dispositif mettant en oeuvre ce procédé.

Selon ce procédé de réception, étant donné qu'il n'y a pas d'arrêt de la réception d'information, et que le second canal transmettant l'ensemble des informations de signalisation, par exemple, les droits d'usagers, le procédé permet de recevoir cette information de signalisation incluant les droits des usagers relativement à un système de contrôle d'accès.

Selon un second aspect de l'invention, il est fourni un procédé de transmission d'un flux de données par tranche sur un canal de diffusion comprenant une étape de transmission de tranches de flux de données sur un canal de diffusion, une étape de transmission sur un second canal, d'information de signalisation correspondant aux tranches de flux de données transmises sur le canal de diffusion.

Selon un troisième aspect de l'invention, il est fourni un dispositif de réception d'un flux de données transmis par tranche sur un ou plusieurs canaux de diffusion comprenant des moyens de réception des données d'une tranche du flux de données transmise sur un canal de diffusion courant, des moyens de changement de canal de réception pour commuter du canal de diffusion courant vers un second canal après avoir reçu la tranche du flux de données, des moyens d'écoute sur ce second canal d'un événement identifiant l'occurrence de la transmission de la tranche suivante du flux de données, et des moyens de changement de canal de réception pour commuter de ce second canal vers le canal de diffusion courant ou un autre canal de diffusion.

Selon le dispositif de l'invention, la consommation d'énergie est fortement réduite puisque le dispositif de réception ne reste en écoute du canal de diffusion que durant la réception de service qu'il attend. Ensuite il commute sur un second canal, préférablement à moindre débit.

Egalement, étant donné que le dispositif de réception n'est pas éteint entre l'émission de deux tranches d'un service, mais est en écoute sur un second canal, il n'y a pas d'appels de courant ni d'usure prématurée des composants du dispositif de réception dû à des mises hors tension très fréquentes.

Préférablement les moyens d'écoute sur ce second canal comprennent la réception d'informations de signalisation.

Préférablement les informations de signalisation comprennent les droits des usagers.

Le dispositif de réception étant en écoute de ce second canal lorsque le service n'est pas en cours de transmission sur un canal de diffusion, il reçoit l'ensemble des informations de signalisation, par exemple, les droits d'usagers.

Préférablement, les moyens d'écoute sur ce second canal comprennent la réception d'un événement identifiant l'occurrence de la transmission de la tranche suivante du flux de données et pouvant inclure les informations d'identification du canal de diffusion sur lequel la tranche suivante du flux de données va être transmise.

L'événement doit inclure l'identifiant du service qui va être transmis, et peut comprendre un certain nombre d'informations permettant de commuter de ce second canal vers un canal de diffusion. En effet, lorsque l'usager se déplace, le service peut être émis sur un canal de diffusion différent à chaque tranche, il est donc nécessaire d'avoir l'information du canal vers lequel commuter.

Selon un quatrième aspect de l'invention, il est fourni un dispositif de transmission d'un flux de données par tranche comprenant des moyens de transmission de tranches de flux de données sur un canal de diffusion, des moyens de transmission sur un second canal, d'information de signalisation correspondant aux tranches émises sur le canal de diffusion.

Préférablement, les informations de signalisation comprennent des événements identifiant l'occurrence de la transmission d'une tranche du flux de données et peuvent inclure les informations d'identification du canal de diffusion dace flux de données.

### Courte description des dessins

D'autres caractéristiques et avantages de la présente invention apparaîtront plus clairement à la lecture de la description suivante en référence aux dessins annexés correspondants dans lesquels:

La Figure 1 montre une représentation à deux dimensions d'un schéma d'un canal de diffusion de service selon un mode conventionnel de multiplexage fréquentiel de communication.

La Figure 2 montre une représentation à deux dimensions d'un schéma de transmission de service par tranches temporelles.

La Figure 3 montre le mode de fonctionnement marche I arrêt des unités de traitement en réception lors de la transmission de service selon la Figure 2.

La Figure 4 montre un bloc diagramme schématique d'un système de télévision numérique.

La Figure 5 montre un bloc diagramme d'un récepteur I décodeur gérant la réception de service transmis par tranches temporelles.

La Figure 6 montre un schéma de permutation de l'unité de réception du canal de données à haut débit à un canal de signalisation à bas débit selon l'occurrence de service pertinent.

La Figure 7 montre un organigramme pouvant être mis en oeuvre dans l'unité de traitement de la signalisation illustrant la programmation de la permutation d'un canal haut débit vers un canal bas débit et vice versa.

La Figure 8 montre un bloc diagramme d'un système de transmission audiovisuelle mobile ayant une transmission sur deux types de canaux, un canal à haut débit et un canal à bas débit.

La Figure 9 montre la transmission d'un flux à la fois selon le mode conventionnel de transmission et le mode de transmission par tranches temporelles.

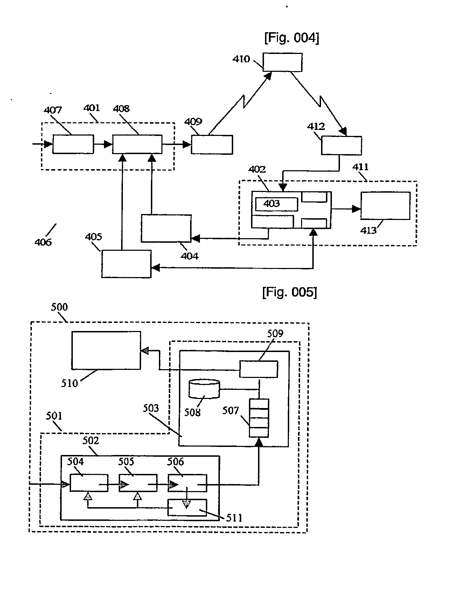

Un système de télévision numérique 406 est montré en Figure 4. Ce système 406 comprend un centre de diffusion 401, un terminal 411 contenant un récepteur *I* décodeur 402, une architecture logiciel ou matériel 403 du récepteur / décodeur et un équipement de visualisation 413, un système interactif 404, et un système d'accès conditionnel 405. Ce système inclut un système de télévision numérique 406 utilisant le système de compression MPEG-2 connu pour transmettre des signaux numériques compressés. Le compresseur 407 MPEG-2 dans le centre de diffusion reçoit un flux numérique, typiquement un flux de signaux audio, et / ou vidéo, et transforme ces flux en signaux numériques au format MPEG-2. Le compresseur est connecté par une liaison à un multiplexeur et un embrouilleur 408 (scrambler selon la terminologie anglaise). Le multiplexeur 408 reçoit une pluralité de sources transformées et / ou des données (applications et données d'applications), rassemble ces sources dans un unique canal et transmet les flux numériques compressés à un émetteur (modulateur, parabole d'émission) 409 du centre de diffusion.

Le centre de diffusion transmet les flux de données via une première liaison (satellite, terrestre, câble, combinaison de deux ou plusieurs moyens de transmission) vers une borne 410 qui va les retransmettre via une seconde liaison vers les récepteurs 412, par exemple, au travers de paraboles. Ces flux de données sont transmis sur une certaine plage de fréquence appelée bande passante. Celle-ci est décomposée en un certain nombre de flux élémentaires correspondant à un service. (voir Figure 1).

Les signaux reçus par l'antenne 412 sont transmis au récepteur / décodeur 402 du terminal 411 de l'usager sur lequel est connecté un équipement de visualisation 413, tel qu'une télévision. Ce récepteur / décodeur filtre une portion du flux global de données correspondant au service attendu par l'usager. Ensuite le récepteur/ décodeur décode le signal MPEG-2 compressé en un flux de données vidéo ou autres pour le dispositif de visualisation tel qu'une télévision.

Un système interactif 404 est connecté au multiplexer 408 et au récepteur / décodeur 402 et est localisé partiellement dans le centre de diffusion 401 et partiellement dans le terminal 411. Il permet à l'usager final d'interagir avec un certain nombre d'applications via un canal de retour. Le canal de retour peut être par exemple un canal PSTN (Public Switched Telephone Network) ou un canal GPRS ou UMTS.

Un système d'accès conditionnel 405 est aussi connecté au multiplexeur 408 et le récepteur / décodeur 402 et est également localisé partiellement dans le centre de diffusion 401 et partiellement dans le récepteur / décodeur 402. Il permet à l'usager d'accéder aux transmissions de données de télévision numérique diffusées d'un ou plusieurs fournisseurs. Une carte à puce, capable de décrypter les messages en relation aux offres commerciales peut être insérée dans le récepteur / décodeur 402.

Une partie des programmes transmis par le système de diffusion sont codés, les conditions et les clés de cryptage appliqués à une transmission étant déterminés par le système de contrôle d'accès. Les données codées sont transmises avec un mot de contrôle pour décoder les données, le mot de contrôle étant lui-même crypté par une clé d'exploitation et transmis sous une forme cryptée.

Les données codées et le mot de contrôle crypté sont reçus par le récepteur / décodeur ayant accès à la clé d'exploitation enregistrée dans la carte à puce insérée dans le récepteur / décodeur pour décrypter le mot de contrôle crypté et ensuite décoder les données transmises.

Concernant le système d'accès conditionnel, il inclut un système d'autorisation (Susbscriber Authorization System - SAS). Le SAS est connecté à un ou plusieurs système de gestion des souscriptions (Subscriber Management Systems - SMS), par un lien qui peut être un lien TCP-IP ou un autre type de lien. Un SMS peut également être partagé entre deux opérateurs commerciaux ou un opérateur peut utiliser deux SMS, etc. Le SAS a pour rôle de générer et délivrer les données de souscription de l'usager. Ces données sont enregistrées dans la carte à puce de celui-ci. Ces droits sont émis par des messages appelés EMM (Entitlement Management Message - message de gestion des droits). Ce dernier contient l'adresse d'un décodeur unique et la clé d'exploitation préalablement cryptée par une clé propre et unique à la carte à puce du décodeur considéré.

Le récepteur / décodeur contient une carte à puce qui reçoit les droits du souscripteur reçus du SAS. En fait, la carte à puce contient l'information confidentielle d'un ou plusieurs opérateurs commerciaux.

Au sein du centre de diffusion, le signal vidéo numérique est dans un premier temps compressé, en utilisant le compresseur MPEG-2. Ce signal compressé est alors transmis au multiplexeur afin d'être multiplexé avec d'autres données telles que des données interactives.

L'embrouilleur génère un mot de contrôle utilisé dans le traitement d'embrouillage et inclut ce mot de contrôle dans le flux MPEG-2 dans le multiplexeur. Le mot de contrôle permet au récepteur / décodeur de l'usager de désembrouiller (descrambler selon la terminologie anglaise) le programme.

Ce mot de contrôle est utilisé pour construire un ECM (Entitlement Control Message - message de contrôle des titres d'accès), message émis avec un programme embrouillé. Le mot de contrôle est transmis à une seconde unité de cryptage. Dans cette unité, un ECM est généré, crypté et transmis vers le multiplexer / embrouilleur.

Chaque diffusion de service par un fournisseur comprend un nombre distinct de composants : par exemple, un programme de télévision inclut un composant vidéo, un composant audio, un composant de sous-titrage, etc. Chacun de ces composants d'un service est individuellement embrouillé et crypté. Un ECM pour chacun des composants est requis.

Le multiplexeur reçoit les signaux électriques comprenant les EMM cryptés du SAS, les ECM cryptés et les programmes compressés et embrouillés. Le multiplexeur rassemble cette pluralité de source dans un unique canal et transmet le résultat au système de diffusion, qui peut être par exemple un système satellite ou un autre système de diffusion. Le récepteur dé-multiplexe les signaux pour obtenir les programmes embrouillés avec les EMM et les ECM cryptés.

Le récepteur reçoit le signal émis et extrait le flux de données MPEG-2. Si le programme est embrouillé, le décodeur extrait les ECM correspondant dans le flux MPEG-2 et passe les ECM à la carte à puce de l'usager. La carte à puce vérifie que l'usager a les droits nécessaires pour décrypter les ECM et accéder au programme. Si l'usager n'a pas les droits, le décodeur indique que le programme ne peut pas être désembrouillé. Si l'usager a les droits, l'ECM est décrypté et le mot de contrôle extrait. Le décodeur peut alors désembrouiller le programme utilisant le mot de contrôle. Le flux MPEG-2 est alors décompressé et transmis au dispositif de visualisation.

Si le programme n'est pas embrouillé, alors aucun ECM ne sera transmis avec le flux MPEG-2, et le récepteur / décodeur décompresse les données et transforme le signal en un signal vidéo transmis au dispositif de visualisation.

Selon l'invention, les différents flux correspondant à plusieurs services entrant dans le multiplexeur / embrouilleur sont multiplexés de manière temporelle c'est-à-dire chaque service est découpé en un ensemble de tranches temporelles avant d'être transmis au centre de diffusion. Une tranche de chaque service est émise séquentiellement puis cette opération est stérée afin de transmettre le service dans son ensemble tel que montré dans la Figure 2.

Si la bande passante est par exemple de 30 méga bits par seconde, et que le service 4 est émis selon le schéma de transmission standard à un débit de 4 méga bits par seconde, lors de la transmission de ce service selon le schéma de transmission par tranche du flux de données, ce service peut être émis de la manière suivante : le service est découpé en tranches de 300 méga bits, la transmission de cette tranche selon la bande passante va être effectuée en 10 secondes et la prochaine tranche à transmettre sera effectuée 65 secondes plus tard après la fin de réception de la tranche.

Afin d'économiser l'énergie disponible du dispositif portable, les unités de réception, de démodulation et de dé-multiplexage du récepteur du terminal ne sont en réception sur le canal de diffusion que durant la période de transmission des données pertinentes pour l'usager.

Sur réception d'une tranche de flux de données d'un service, l'unité de démultiplexage va stocker cette information dans une mémoire tampon. Le flux MPEG-2 se caractérise par un grand nombre de paquets. Ces paquets se décomposent de la manière suivante : un entête indiquant entre autre, l'identifiant du service transporté et une charge utile contenant les données audio/vidéo/data. La norme MPEG2 (couche système) s'appuie sur la transmission d'estampilles temporelles PCR (Program Clock Reference - référence d'horloge pour un programme en MPEG-2) permettant de reconstruire au niveau du décodeur une horloge système. Cette horloge est utilisée pour assurer une transmission synchrone à délai constant entre l'encodeur et le décodeur des flux élémentaires audio et vidéo. Afin de rester compatible avec la norme MPEG-2 qui impose un temps de répétition très court pour les PCR associées à chaque programme audio / vidéo, la charge utile des paquets pour les services transmis par tranches est faite de données (par exemple d'un ou plusieurs paquets IP ayant des contenus audiovisuels au format MPEG-4), ce qui libère la contrainte de compatibilité avec MPEG2 imposant la réception en permanence des PCR pour les flux élémentaires audio et vidéo. Le flux sauvegardé peut être de différentes natures :

- soit seule la partie charge utile des paquets MPEG-2 est mémorisée dans la mémoire tampon, et donc l'entête du message est supprimée. - soit le flux est entièrement sauvegardé dans cette mémoire tampon pour être ultérieurement traité.

Le décodeur va traiter l'information contenue dans la mémoire pour ensuite visualiser ce service. Si le programme est embrouillé, le décodeur utilise les ECM correspondant dans le flux MPEG-2 et passe les ECM à la carte à puce de l'usager. La carte à puce vérifie que l'usager a les droits de décrypter les ECM et d'accéder au programme. Si l'usager n'a pas les droits, le décodeur indique que le programme ne peut pas être désembrouillé. Si l'usager a les droits, l'ECM est décrypté et le mot de contrôle extrait. Le décodeur peut alors désembrouiller le programme utilisant le mot de contrôle. Le flux MPEG-2 est alors décompressé et transmis au dispositif de visualisation.

La Figure 5 présente un schéma de réalisation de la structure d'un terminal 500 comprenant un récepteur / décodeur 501 permettant l'enregistrement du flux émis dans une mémoire tampon 507 et un équipement de visualisation 510. Le récepteur 502 gère la réception 504 du flux MPEG-2 et renvoie ce flux au démodulateur 505. Puis ce flux est transmis au dé-multiplexeur 506 réalisant la séparation des différentes informations transmises dans le flux (ECM crypté, composantes embrouillées) afin de pouvoir les désembrouiller ultérieurement. Selon l'information reçue, le dé-multiplexeur va émettre d'une part les informations de signalisation à l'unité de traitement de la signalisation 511 et d'autre part les données audio / visuelle dans la mémoire tampon 507. L'information lue dans la mémoire tampon est ensuite lue par l'unité de traitement 509 du décodeur 503 qui va désembrouiller le programme si celui-ci est embrouillé et si l'usager a les droits d'accès correspondant. Le résultat est émis à l'équipement de visualisation 510. L'unité de traitement de la signalisation 511 a pour rôle de traiter l'ensemble des informations de signalisation. Ces informations incluent la signalisation PSI (Program Specific Information), la signalisation SI (Signalisation Information) présentant un moyen de navigation au sein d'un ensemble de services et d'événements, ainsi que les différentes tables manipulées par la mise en oeuvre de la norme DVB, tel que la table SDT (Service Description Table), la table BAT (Bouquet Association Table), la table NIT (Network Information Table), etc.

La mémoire tampon 507 est une mémoire temporaire qui va contenir l'ensemble des informations devant permettre au décodeur de reconstituer le signal à visualiser durant le chargement d'une tranche et entre deux chargements. Cette mémoire est gérée selon le mode FIFO (First In, First Out), et est implantée selon une mémoire circulaire. La taille de cette mémoire doit être supérieure à la taille de réception d'une tranche de chargement. Dans notre cas d'exemple, la taille doit être supérieure à 300 méga bits. Il peut aussi être utilisé une mémoire de stockage de type disque dur 508.

Afin ne pas provoquer une usure accélérée des composants du récepteur, les unités de réception, de démodulation et de dé-multiplexage ne vont pas être éteintes. En effet, l'invention consiste à ne pas arrêter la réception pendant l'intervalle de temps séparant l'émission de deux tranches, mais de se mettre à l'écoute d'un canal de signalisation à bas débit. Etant donné que peu d'information est transmise sur ce type de canal, la consommation d'énergie est très faible. Ce canal de signalisation à bas débit véhicule les événements qui vont indiquer au récepteur le moment et le canal sur lequel le service va être transmis lors de la prochaine occurrence de la transmission d'une tranche du service.

Le terme « canal bas débit » signifie qu'il s'agit d'une faible portion d'une bande passante. Selon la technologie OFDM (Orthogonal Frequency Division Multiplexing - Système de modulation numérique sur un grand nombre de porteuses) sur laquelle s'appuie la norme DVB-T, il peut s'agir d'un ensemble prédéfini de sous porteuses.

Selon l'invention, l'information d'indication de la prochaine occurrence de la transmission d'une tranche d'un service n'est plus indiquée dans la tranche précédemment transmise, mais un événement émis sur le canal de signalisation va déclencher dans le récepteur un changement du canal de réception. En effet, le récepteur va commuter vers le canal à haut débit sur lequel le service pertinent va être diffusé. Contrairement aux techniques précédemment présentées où des risques de désynchronisation peuvent arriver (par exemple, dans le cas d'un décalage de transmission du service correspondant par exemple à la réduction ou l'augmentation du délai entre deux tranches de données) impliquant la non-réception d'une partie d'un service, la présente invention étant basée sur un changement de canal de réception suite à l'écoute d'une information de type événementiel indiquant que la tranche suivante du flux de données pertinent va être transmise, ne peut subir de désynchronisation.

Le terme « événement » fait référence soit à un message structuré transmis, soit à la levée d'un événement, d'une exception, etc. Les principaux exemples de réalisation possibles sont l'utilisation d'un marqueur, d'un trigger, d'indication de synchronisation, d'un signal, d'un descripteur, etc.

L'événement indiquant l'occurrence de la transmission de la tranche suivante du flux de données émis sur le canal bas débit contient au moins l'identifiant du service qui va être transmis.

Ces informations peuvent être transmises, par exemple, par l'émission d'un message contenant un entête afin d'identifier le type du message (ex : occurrence d'une tranche de service, etc.) et un champ contenant l'identifiant du service.

Le mécanisme permettant de retrouver le canal de diffusion sur lequel est transmis un service peut être réalisé de différentes manières. Un premier mode de réalisation peut se baser sur l'envoi de l'événement identifiant l'occurrence du prochain service et l'information nécessaire permettant d'identifier le canal de diffusion sur lequel sera transmis le service. Un seconde mode de réalisation peut être basé sur des tables émises transportant l'information suivante :

- la topologie du réseau (les cellules)
- pour chaque transpondeur, sa fréquence dans chaque cellule
- pour chaque service, la liste des cellules où il est accessible.

Selon le schéma d'un terminal, présenté à la Figure 5, l'unité de réception 504 reçoit le flux de données pour ensuite le transmettre au démodulateur 505 puis au démultiplexeur 506. Le dé-multiplexeur 506, étape suivante du traitement de la réception va extraire du flux les informations de signalisation pour les transmettre à l'unité de traitement de la signalisation 520. Ce dernier a la connaissance du service sélectionné par l'usager. Lorsque celui-ci reçoit un événement lui indiquant l'occurrence de la tranche suivante du flux de données du service, il émet une commande au démodulateur 505 et à l'unité de réception 504 afin de commuter de canal de réception.

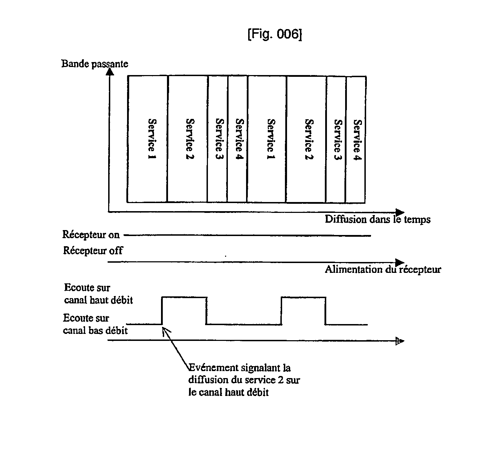

La Figure 6 montre la permutation d'écoute du récepteur. En effet, lorsque le canal haut débit transmet un flux de données non pertinent pour l'usager, le récepteur est en écoute sur le canal à bas débit permettant un suivi des événements transmis. Lorsque la tranche suivante du flux de données pertinent est signalée par un événement, le récepteur commute sur le canal haut débit où sera transmis le flux de données pertinent à l'usager, le récepteur en fonction du service attendu. A la fin de la transmission du service pertinent, le récepteur bascule à nouveau en écoute sur le canal de signalisation à bas débit.

L'événement indiquant une occurrence de service est transmis tel que le montre la Figure 6, un quantième de temps avant le début de la transmission effective du service. Le quantième de temps correspond au délai pour le récepteur de commuter du canal bas débit vers le canal de diffusion dont l'identifiant a été émis, de se synchroniser selon le canal haut débit.

Après avoir commuté, l'unité de démodulation va se synchroniser sur le canal haut-débit, le démodulateur gérant la récupération de la synchronisation au train de transport des données.

La synchronisation du démodulateur sur un canal s'effectue soit à l'aide de paramètres émis dans les informations de signalisation soit à l'aide de paramètres statiques connus du démodulateur sans avoir à les récupérer sur le flux de signalisation. Ces paramètres contiennent la fréquence du transpondeur émetteur du service.

Ainsi dès que l'on reçoit une information de synchronisation sur le canal de signalisation qui annonce le début de l'émission d'une tranche du service sélectionné, les paramètres de démodulation vont être lus de l'information de signalisation et les porteuses du canal vont être démodulées.

Pour réaliser la commutation, le tuner sélectionne le canal sur lequel commuter, l'identifiant du canal et ses paramètres de réception étant précédemment émis sur le canal de signalisation. Ensuite le tuner transpose ce canal et effectue la filtrage requis ; le signal amplifié est démodulé de façon cohérente pour fournir les signaux I et Q analogiques en sortie. Le signal I est utilisé pour moduler une sortie non déphasée de l'oscillateur local, et le signal Q module une sortie déphasée de π/2 de ce même oscillateur. La récupération de la phase de la porteuse, nécessaire à une démodulation correcte, se fait en coopération avec les étages suivants par une boucle de fréquence qui permet d'asservir la phase de l'oscillateur du démodulateur. Les signaux I et Q sont appliqués chacun à un convertisseur analogique / numérique. Il s'agit le plus souvent d'un double convertisseur capable d'échantillonner le signal. Le démodulateur, outre les fonctions de récupération d'horloge et de porteuse, réalise des filtrages complémentaires (ex : filtrage demi Nyquist) appliqué à l'émission sur les signaux I et Q. Un module de correction d'erreur de transmission (FEC: Forward Error Correction) distingue au moyen d'une logique majoritaire les 0 des 1, puis effectue l'ensemble de la correction d'erreurs (par exemple, décodage de Viterbi, le désentrelacement, le décodage, et le débrassage). Le démultiplexeur permet la sélection au moyen de filtres des trains élémentaires MPEG (les PES : Packetized Elementary Stream).

Après la phase de synchronisation, le dé-multiplexer reçoit l'ensemble des paquets transmis sur le canal de diffusion. Si les paquets transmis et reçus par le démultiplexeur ne correspondent pas au service attendu par l'usager, c'est-à-dire l'identifiant du service contenu dans l'entête des paquets ne corresponde pas au service attendu alors ces paquets sont ignorés. Cependant dès qu'un paquet contient la bonne entête c'est-à dire, contient l'identifiant du service attendu, le dé-multiplexeur commence à transmettre le résultat de son traitement dans la mémoire tampon pour les données audio/vidéo.

La fin de l'émission d'une tranche de service peut être traitée de différente manière. Une première solution est la suivante : lorsque l'identifiant des paquets reçus change, c'est-à-dire que la tranche du service pertinent est totalement transmise et que la tranche du service suivant commence à être transmise, l'unité de réception quitte le canal de diffusion à haut débit pour commuter en réception sur le canal de signalisation à bas débit transportant l'information de signalisation.

Une seconde solution possible est l'utilisation d'un événement de signalisation de fin de tranche, cet événement étant un marqueur de fin d'émission d'une tranche. Cet événement sera traité par l'unité de traitement de la signalisation et cette dernière commandera la commutation de canal de réception.

Ensuite, le récepteur se met en écoute du prochain événement lui indiquant l'occurrence du service pertinent à l'usager.

Le canal de signalisation à bas débit transporte également toutes les autres informations de signalisation (PSI, SI, tables BAT, NIT, etc.). Ce canal transmet également les données personnalisées telles que les EMM des usagers, pour la mise à jour des droits liés à la souscription de l'usager.

Le terme « table » préférablement fait référence à une structure de données ayant une entête de longueur fixe et un corps de longueur variable, et fait référence de préférence à une structure de données telle que communément utilisée dans les systèmes de transmission numérique, par exemple celles basées sur les standards MPEG et DVB. Le terme « table » inclut les tables MPEG / DVB telles que définies dans les standards mais aussi d'autres tables prévues pour être utilisées avec les systèmes de transmission basés sur MPEG / DVB.

Ainsi dans la solution proposée, des événements signalant l'occurrence d'un service sont insérés dans le canal de signalisation transportant la signalisation classique afin d'indiquer sur quel canal le récepteur doit commuter pour recevoir le flux de données correspondant aux données du service sélectionné par l'usager. Ces événements sont émis avec l'avance nécessaire pour permettre au récepteur de se positionner sur le bon canal haut débit.

Dans une implémentation particulière qui veillerait à exploiter au mieux la norme DVB-T de modulation numérique terrestre, le canal de signalisation serait transporté pour chaque canal DVB-T par quelques-unes des sous-porteuses contenues dans le spectre d'un canal DVB-T.

Selon la norme DVB-T, deux modes de fonctionnement sont définis : le « mode 2K » et le « mode 8K ». Selon cette norme, il existe 1705 sous-porteuses en mode 2K et 6817 sous-porteuses en mode 8K. Ainsi, en dehors de la transmission d'une tranche du flux de données relatif au service sélectionné, le démodulateur OFDM du récepteur ne démodulerait que les quelques sous-porteuses du signal sur lequel le récepteur est en écoute, ces sous-porteuses véhiculant les informations de signalisation. Les informations reçues peuvent indiquer quelques instants avant le début de l'occurrence de la transmission d'une tranche de service pertinent pour le récepteur le canal sur lequel ce service est transmis.

Selon cette réalisation, l'événement indiquant au récepteur l'occurrence de la transmission sur un canal haut débit du service pertinent, les informations telles que les EMM, l'identifiant de la borne qui va diffuser le service pertinent et l'identifiant du canal, sont transmises par exemple sur un ensemble de sous-porteuses. Cet ensemble de sous porteuses permet d'avoir une bande passante limitée transmettant la signalisation. Ainsi, selon cette réalisation, le canal de signalisation est traduit par un ensemble de sous porteuses permettant de produire un canal à bas débit.

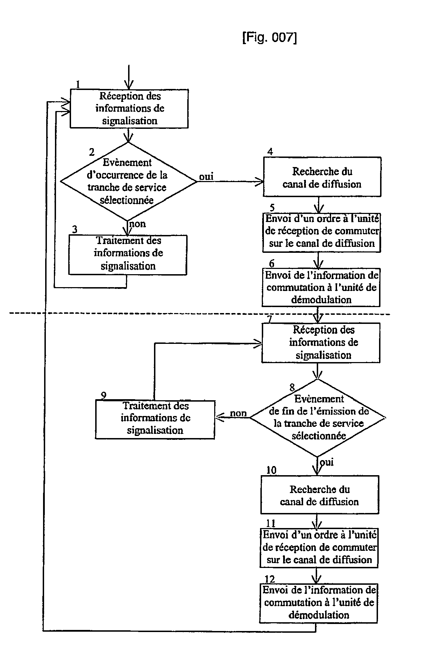

La Figure 7 présente une mise en oeuvre possible du mécanisme de gestion de la commutation de canal de réception par l'unité de traitement de la signalisation. Détaillons ce fonctionnement. Lorsque le récepteur est en écoute du canal de signalisation, l'unité de traitement de la signalisation va recevoir l'ensemble des données de signalisation (1). Si parmi ces données, un événement indiquant l'occurrence de la transmission de la tranche suivante du flux de données du service de l'usager est émis (2), alors l'unité de traitement de la signalisation va réaliser un certain nombre d'étape (4 à 6) afin de faire commuter le récepteur vers un canal de diffusion, sinon cette unité reste en écoute et traite les informations de signalisation (3).

La commutation du récepteur du canal de signalisation à bas débit vers un canal de diffusion à haut début va être pilotée par l'unité de traitement de la signalisation. Tout d'abord, celle-ci va rechercher soit dans les informations émises avec l'événement d'occurrence du service soit à l'aide des tables décrites ci-dessus (table de topologie du réseau, table des fréquences, table des cellules, etc.) le canal de diffusion sur lequel la prochaine tranche de service va être émise (4). Après avoir identifié ce canal de diffusion, l'unité de traitement de la signalisation va émettre à l'unité de réception une commande de commutation sur ce canal (5). Une commande sera également émise à l'unité de dé-modulation afin de l'informer du changement d'état du récepteur. (6)

Après avoir émis ces commandes, l'unité de traitement de la signalisation va recevoir l'ensemble des données de signalisation (7) qui sont transmises en parallèle des données audio / visuelle. Tant que les informations de signalisation ne contiennent pas un marqueur de fin de transmission d'une tranche du service de l'usager (8), l'unité de traitement de la signalisation reste en écoute des informations de signalisation. Sur réception du marqueur de fin de transmission d'une tranche de service, l'unité de traitement de la signalisation va opérer la commutation du récepteur vers un canal de signalisation bas débit (10 à 12).

Pour cela, l'unité de traitement de la signalisation va rechercher soit dans une valeur stockée soit dans les tables décrites ci-dessus un canal bas débit sur lequel le récepteur va pouvoir commuter (10). Ensuite, une commande sera émise à l'unité de réception afin de lui indiquer le canal sur lequel commuter (11). L'unité de dé-modulation sera également informée (12). L'unité de traitement de la signalisation va retrouver son comportement décrit à partir de l'étape (1).

### Mode terrestre avec changement de bornes

Dans la transmission terrestre numérique, le récepteur du terminal mobile peut recevoir des données de différents émetteurs situés dans un secteur du récepteur. Le secteur couvert par un émetteur s'appelle une cellule. Une région peut être couverte par de nombreuses cellules, chacune pouvant avoir une taille différente. Afin de permettre la continuité du service dans tous les secteurs, les cellules se recouvrent. Selon la technologie de transmission DVB-T, lorsqu'un récepteur d'un terminal mobile est situé dans une cellule, il connaît les cellules adjacentes afin de pouvoir commuter vers le flux de données reçu le plus puissant et le meilleur. Afin d'éviter que le récepteur ait à balayer toute la gamme de fréquence et trouver quels émetteurs sont disponibles et comment utiliser les services, chaque émetteur diffuse des informations sur l'émetteur adjacent. Le récepteur peut alors sauter directement sur le canal pertinent et obtenir une bonne réception. Pour obtenir ces informations concernant la topologie de réseau, il est important que le récepteur soit capable de surveiller l'information concernant chaque cellule et les cellules adjacentes. Dans le cas de la transmission par tranche du flux de données, si le récepteur est entièrement éteint entre les tranches de diffusion de flux de données, tel que connu de l'état de l'art, il n'est pas possible de changer de cellule.

Selon l'invention, le récepteur est toujours en réception des informations de signalisation sur un canal bas débit et donc peut choisir lorsqu'il doit changer de canal de réception afin d'assurer la continuité du service, sur quelle cellule se mettre en réception.

Ainsi les informations de signalisation contiennent aussi bien les informations de service de la cellule mais aussi les informations de services accessibles sur les cellules adjacentes.

Ainsi selon cette technologie, les petits terminaux mobiles ayant des capacités d'énergie limitées peuvent être très fréquemment utilisés par des usagers mobiles (en voiture, en train ...) ou dans des secteurs ayant un grand nombre de petits émetteurs locaux (par exemple, afin d'émettre de la publication dans des grands supermarchés, d'indiquer les possibilités de stationnement dans les villes, de diffuser les programmes de films, d'informer les usagers dans les aéroports ...). Par conséquent il est important d'assurer une qualité de service continue tout en évitant au récepteur lors de sa remise en marche de balayer les cellules afin de découvrir le canal de réception et la liste des services de la nouvelle cellule sur lequel il est en réception.

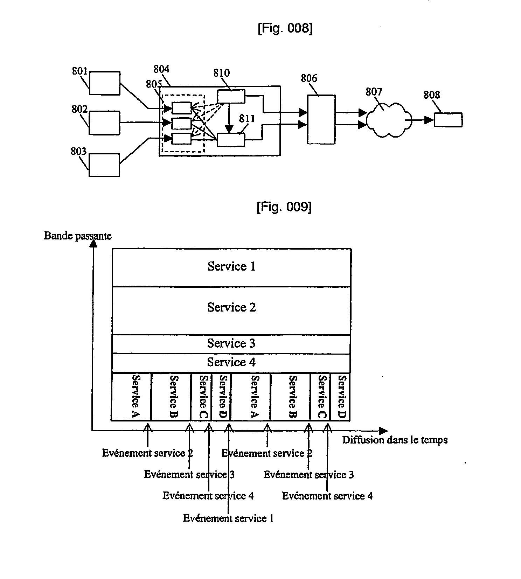

La Figure 8 présente une réalisation possible d'un système de transmission audiovisuelle mobile selon l'invention.

Les unités 801, 802 et 803 sont des serveurs IP diffusant chacun en multicast un contenu audiovisuel au format par exemple MPEG-4 à quelques centaines de kilo bit par seconde. Ces différentes sources offrent pour chacune d'elle des services aux usagers. Ce format MPEG-4 est tout particulièrement adapté à la fourniture de vidéo, audio pour les terminaux ayant une faible capacité d'affichage. Chacune de ces unités fournit un flux vidéo, audio, et des données (soit de types applications soit de type données d'application). Ces flux sont insérés dans un ensemble de mémoires 805 dans l'unité 804 afin d'être traités et transmis, en effet, à chaque source (unités 801, 802, 803) est associée une mémoire permettant de stocker le service offert par celle-ci.

L'unité 804 contient une unité d'encapsulation 811 par exemple, le système DVB-MPE (Multi-Protocol Encapsulation), chargé d' encapsuler les paquets IP émis par les serveurs IP 801, 802 et 803 présents dans la mémoire 805 dans des paquets MPEG-2 ayant un identifiant unique et fixe par service.

L'unité de contrôle et de séquencement 810 va décomposer les services temporellement c'est-à-dire le flux de paquets IP des services présents dans les mémoires 805 en tranches temporelles. Pour cela, il émet des commandes à l'unité d'encapsulation 811 lui indiquant le flux de paquets IP en lui indiquant la mémoire 805 dans laquelle se trouve le flux et la taille (correspondant à la tranche) de l'information à traiter.

Le flux MPEG-2 résultant est injecté soit dans un multiplexeur qui après traitement sera transmis au modulateur 806 soit directement dans le modulateur 806 par exemple de type DVB-T. Une unité de contrôle et de séquencement 810 génère les événements qui seront émis sur un canal de signalisation.

Ces événements reflètent un quantième de temps avant l'émission d'une tranche d'un service, l'identifiant de celui-ci. Cette unité de contrôle et de séquencement 810 est connectée à l'unité 804 afin de générer l'événement correspondant à la tranche traitée par l'unité d'encapsulation 811 et qui sera prochainement transmise. Ce flux de signalisation associé aux services transmis sur le canal haut débit est également transmis parallèlement au modulateur 806. Ce dernier 806 transmet le résultat du traitement de l'unité d'encapsulation sur un canal haut débit et le flux de signalisation sur un canal à bas débit. Ces deux canaux (haut et bas débits) sont transmis à travers le réseau 807 et sont reçus par les récepteurs 708 des terminaux des usagers.

Dans une implémentation particulière exploitant la norme DVB-T de modulation numérique terrestre, le flux de signalisation serait transporté pour chaque canal DVB-T par quelques-unes des sous-porteuses contenues dans le spectre d'un canal DVB-T.

Selon un autre aspect de l'invention, le flux transmis peut contenir simultanément des services MPEG-2 classiques (services 1, 2, 3, 4) et des services émis par tranche, tel que mentionné à la Figure 9. Selon ce schéma, le récepteur a la possibilité de réceptionner aussi bien des services transmis de manière classique que des services transmis en tranche. Ainsi, si l'usager d'un terminal de faible capacité a sélectionné un service découpé, par exemple le service A, le récepteur est en écoute sur le canal de signalisation à bas débit dans l'attente de l'événement lui indiquant de commuter sur le canal haut débit qui va transmettre le service pertinent pour l'usager. L'information du canal pertinent est également émise. Durant la transmission, le récepteur / décodeur va remplir sa mémoire tampon par les informations transmises. A la fin de la réception de la tranche du flux de données pertinente, le récepteur se remet en écoute sur le canal de signalisation afin de détecter le prochain événement c'est-à-dire la prochaine occurrence de la transmission de la tranche du flux de données.

Ce schéma de transmission peut être organisé de la manière suivante : la bande passante est divisée en deux parties, la première partie destinée à la transmission de flux de données en continu pour les terminaux standard, et la seconde partie destinée à la transmission de flux de données par tranches pour les terminaux à faible capacité d'énergie et ayant un format d'affichage réduit. La première partie peut représenter une grande section de la bande passante alors que la deuxième partie une très faible section, en effet, la masse d'information émise en continu pour les terminaux à fortes capacités de traitement est bien supérieure. La quantité d'information pour l'affichage d'un service sur un terminal ayant un format d'affichage réduit est faible.

Un dispositif de stockage dans le récepteur / décodeur peut également comprendre un disque dur. Ainsi le récepteur / décodeur doit être muni des moyens d'écriture pour écrire les données sur le disque dur. Le disque dur peut inclure deux zones de stockage, une zone d'enregistrement afin de visualiser ultérieurement le service et une zone de sauvegarde d'une certaine quantité d'information permettant à l'usager de visualiser son service en léger différé (appelé time shifting). Cette zone de mémoire peut être implantée selon une mémoire circulaire sur le disque dur, afin d'enregistrer seulement une quantité limitée d'information dont on veut différer la visualisation.

L'avantage de cette invention est de permettre au récepteur de recevoir les données pertinentes pour l'usager sur un canal à haut débit lorsque celles-ci sont transmises, et toutes les informations de signalisation relatives au réseau et les informations individuelles (EMM) sur un canal à bas débit. La consommation d'énergie est fortement réduite puisque la réception de flux sur un canal à bas débit n'engendre que peu de consommation d'énergie. De plus, il n'y a pas d'appels de courants puisque le récepteur n'est pas arrêté et redémarré très régulièrement et donc il n'y a pas d'usure prématurée des composants du récepteur. Un autre avantage majeur est l'utilisation de l'invention pour sa mise en oeuvre dans un contexte de télévision numérique terrestre. En effet, selon l'invention, le récepteur lors de l'arrivée de l'occurrence d'un service, a l'information nécessaire pour immédiatement commuter sur l'émetteur approprié.

## Revendications

1. Procédé de réception d'un flux de données transmis par tranche sur un ou plusieurs canaux de diffusion **caractérisé en ce qu'**il comprend
- une étape de réception des données d'une tranche du flux de données transmise sur un canal de diffusion courant,
- une étape de changement de canal de réception pour commuter du canal de diffusion courant vers un second canal après avoir reçu la tranche du flux de données,
- une étape d'écoute sur ce second canal d'un événement identifiant l'occurrence de la transmission de la tranche suivante du flux de données, et
- une étape de changement de canal de réception pour commuter de ce second canal vers le canal de diffusion courant ou un autre canal de diffusion.

2. Procédé selon la revendication 1 **caractérisé en ce que** l'étape d'écoute sur ce second canal comprend la réception d'un événement identifiant l'occurrence de la transmission de la tranche suivante du flux de données et les informations d'identification du canal de diffusion sur lequel la tranche suivante du flux de données va être transmise.

3. Procédé de transmission d'un flux de données par tranche sur un canal de diffusion, **caractérisé en ce qu'**il comprend
- une étape de transmission de tranches de flux de données sur un canal de diffusion,
- une étape de transmission sur un second canal, d'information de signalisation correspondant aux tanches de flux de données transmises sur le canal de diffusion.

4. Dispositif de réception d'un flux de données transmis par tranche sur un ou plusieurs canaux de diffusion, **caractérisé en ce qu'**il comprend
- des moyens de réception des données d'une tranche du flux de données transmise sur un canal de diffusion courant,
- des moyens de changement de canal de réception pour commuter du canal de diffusion courant vers un second canal après avoir reçu la tranche du flux de données,
- des moyens d'écoute sur ce second canal d'un événement identifiant l'occurrence de la transmission de la tranche suivante du flux de données, et
- des moyens de changement de canal de réception pour commuter de ce second canal vers le canal de diffusion courant ou un autre canal de diffusion.

5. Dispositif selon la revendication 4, **caractérisé en ce que** les moyens d'écoute sur ce second canal comprennent la réception d'informations de signalisation.

6. Dispositif selon la revendication 5, **caractérisé en ce que** les informations de signalisation comprennent les droits des usagers (EMM).

7. Dispositif selon l'une quelconque des revendications 4 à 6, **caractérisé en ce que** les moyens d'écoute sur ce second canal comprennent la réception d'un événement identifiant l'occurrence de la transmission de la tranche suivante du flux de données et les informations d'identification du canal de diffusion sur lequel la tranche suivante du flux de données va être transmise.

8. Dispositif de transmission d'un flux de données par tranche, **caractérisé en ce qu'**il comprend
- des moyens de transmission de tranches de flux de données sur un canal de diffusion,
- des moyens de transmission sur un second canal, d'information de signalisation correspondant aux tranches émises sur le canal de diffusion.

9. Dispositif selon la revendication 8, **caractérisé en ce que** les informations de signalisation comprennent des événements identifiant l'occurrence de la transmission d'une tranche du flux de données.

10. Terminal comprenant un dispositif de visualisation, un décodeur, un dispositif de réception conforme à l'une quelconque des revendications 4 à 7.

## Claims

1. Method for receiving a data stream transmitted in segment on one or more broadcast channels **characterized by** that it comprises
- a step of receiving data in a segment of the data stream transmitted on a current broadcast channel,
- a step of changing receiving channel for switching from the current broadcast channel to a second channel after having received the segment of the data stream,
- a step of pick-up on the second channel of an event identifying the occurrence of the transmission of the following segment of the data stream, and
- a step of changing receiving channel for switching from the second channel to the current broadcast channel or another broadcast channel.

2. Method according to claim 1, **characterized in that** the pick-up step on the second channel comprises the reception of an event identifying the occurrence of the transmission of the following segment of the data stream and the identification information for the broadcast channel on which the following segment of the data stream will be transmitted.

3. Method of transmission of a data flow in segment on a broadcast channel, **characterized by** that it comprises
- a step of transmitting a data stream segment on a broadcast channel,
- a step of transmitting on a second channel, signalling information corresponding to the data stream segments transmitted on the broadcast channel.

4. Reception device for a data stream transmitted in segment on one or more broadcast channels, **characterized by** that it comprises
- means for receiving data from a segment of the data stream transmitted on a current broadcast channel,
- means for changing the receiving channel in order to switch from the current broadcast channel to a second channel after having received the segment from the data stream,
- means for pick-up on this second channel of an event identifying the occurrence of the transmission from the following segment of the data stream, and
- means for changing from the reception channel in order to switch from this second channel to the current broadcast channel or another broadcast channel.

5. Device according to claim 4, **characterized by** that the means for pick-up on this second channel comprises signalling receiving information.

6. Device according to claim 5, **characterized by** that the signalling information comprises user entitlement rights (EMM).

7. Device according to any one of claims from 4 to 6, **characterized in that** the means for pick-up on this second channel comprise the reception of an event identifying the occurrence of the transmission of the following segment of the data stream and the identification information for the broadcast channel on which the following segment of the data stream will be transmitted.

8. Transmission device for a data stream in segments, **characterized by** that it comprises
- means for transmission of segments of data streams on a broadcast channel,
- means for transmission on a second channel of signalling information corresponding to the segments transmitted on the broadcast channel.

9. Device according to claim 8, **characterized by** that the signalling information comprises events identifying the occurrence of the transmission of a segment of the data stream.

10. Terminal comprising a display device, a decoder, a reception device in compliance with any of claims from 4 to 7.

## Patentansprüche

1. Verfahren zum Empfangen eines abschnittsweise über einen oder mehrere Rundsendekanäle übertragenen Datenstroms, **dadurch gekennzeichnet, dass** es folgende Schritte umfasst:
- einen Schritt des Empfangens der Daten eines über einen aktuellen Rundsendekanal übertragenen Abschnitts des Datenstroms,
- einen Schritt des Wechsels des Empfangskanals, um vom aktuellen Rundsendekanal auf einen zweiten Kanal zu schalten, nachdem der Datenstromabschnitt empfangen worden ist,
- einen Schritt, bei dem auf diesem zweiten Kanal ein Ereignis, welches das Ereignis der Übertragung des nächsten Datenstromabschnitts identifiziert, abgehört wird, und
- einen Schritt des Wechsels des Empfangskanals, um von diesem zweiten Kanal auf den aktuellen Rundsendekanal bzw. einen anderen Rundsendekanal zu schalten.

2. Verfahren nach Anspruch 1, **dadurch gekennzeichnet, dass** der Schritt des Abhörens auf diesem zweiten Kanal das Empfangen eines Ereignisses umfasst, welches das Ereignis der Übertragung des nächsten Datenstromabschnitts und die Identifizierungsinformationen des Rundsendekanals, über den die Übertragung des nächsten Datenstromabschnitts bevorsteht, identifiziert.

3. Verfahren zum abschnittsweisen Übertragen eines Datenstroms über einen Rundsendekanal, **dadurch gekennzeichnet, dass** es folgende Schritte umfasst:
- einen Schritt des Übertragens von Datenstromabschnitten über einen Rundsendekanal,
- einen Schritt, bei dem über einen zweiten Kanal Signalisierungsinformationen, die den über den Rundsendekanal übertragenen Datenstromabschnitten entsprechen, übertragen werden.

4. Vorrichtung für das Empfangen eines abschnittsweise über einen oder mehrere Rundsendekanäle übertragenen Datenstroms, **dadurch gekennzeichnet, dass** sie Folgendes umfasst:
- Mittel für das Empfangen der Daten eines über einen aktuellen Rundsendekanal übertragenen Abschnitts des Datenstroms,
- Mittel für den Wechsel des Empfangskanals, um vom aktuellen Rundsendekanal auf einen zweiten Kanal zu schalten, nachdem der Datenstromabschnitt empfangen worden ist,
- Mittel, um auf diesem zweiten Kanal ein Ereignis, welches das Ereignis der Übertragung des nächsten Datenstromabschnitts identifiziert, abzuhören, und
- Mittel für den Wechsel des Empfangskanals, um von diesem zweiten Kanal auf den aktuellen Rundsendekanal bzw. einen anderen Rundsendekanal zu schalten.

5. Vorrichtung nach Anspruch 4, **dadurch gekennzeichnet, dass** die Mittel zum Abhören auf diesem zweiten Kanal das Empfangen von Signalisierungsinformationen umfassen.

6. Vorrichtung nach Anspruch 5, **dadurch gekennzeichnet, dass** die Signalisierungsinformationen die Benutzerrechte (EMM) umfassen.

7. Vorrichtung nach einem der Ansprüche 4 bis 6, **dadurch gekennzeichnet, dass** die Mittel zum Abhören auf diesem zweiten Kanal das Empfangen eines Ereignisses umfassen, welches das Ereignis der Übertragung des nächsten Datenstromabschnitts und die Identifizierungsinformationen des Rundsendekanals, über den die Übertragung des nächsten Datenstromabschnitts bevorsteht, identifiziert.

8. Vorrichtung für die abschnittsweise Übertragung eines Datenstroms, **dadurch gekennzeichnet, dass** sie Folgendes umfasst:
- Mittel für die Übertragung von Datenstromabschnitten über einen Rundsendekanal,
- Mittel, um über einen zweiten Kanal über den Rundsendekanal ausgesendeten Abschnitten entsprechende Signalisierungsinformation zu übertragen.

9. Vorrichtung nach Anspruch 8, **dadurch gekennzeichnet, dass** die Signalisierungsinformationen Ereignisse umfassen, welche das Ereignis der Übertragung eines Datenstromabschnitts identifizieren.

10. Endgerät mit einer Anzeigevorrichtung, einem Decoder, einer Empfangsvorrichtung gemäß einem beliebigen der Ansprüche 4 bis 7.
